Europäisches Patentamt

(19) European Patent Office

Office européen des brevets

(11) Publication number: **0 012 317**
**B1**

(12) EUROPEAN PATENT SPECIFICATION

(45) Date of publication of patent specification: **16.03.83**      (51) Int. Cl.³: **B 65 G  59/10, B 65 B  43/44**

(21) Application number: **79104851.5**

(22) Date of filing: **03.12.79**

(54) Arrangement for dispensing propagation pots etc.

(30) Priority: **05.12.78 NO 784087**

(43) Date of publication of application:
**25.06.80 Bulletin 80/13**

(45) Publication of the grant of the patent:
**16.03.83 Bulletin 83/11**

(84) Designated Contracting States:
**AT DE FR GB NL SE**

(56) References cited:
**DE - A - 2 528 126**
**FR - A - 2 183 556**
**GB - A - 1 024 886**
**US - A - 3 169 356**

(73) Proprietor: **VEFI A/S**
**Kaupangruta**
**N-3250 Larvik (NO)**

(72) Inventor: **Berg, Ake**
**Bjonnes**
**N-3280 Tjodalyng (NO)**
Inventor: **Gundersen, Marius**
**Stavernveien 8**
**N-3250 Larvik (NO)**

(74) Representative: **Wilhelms, Rolf E., Dr. et al,**
**WILHELMS & KILIAN Patentanwälte**
**Geibelstrasse 6**
**D-8000 München 80 (DE)**

Courier Press, Leamington Spa, England.

## Arrangement for dispensing propagation pots

The present invention relates to apparatus for dispensing propagation pots, as described in the first 20 lines of claim 1.

A similar apparatus is shown and described in the applicant's NO—B—137.117.

Although this well-known apparatus works satisfactorily and is a definite technical advance in the horticultural industry, it does have some drawbacks. For example, the support strips in the reciprocable drawer are disproportionately long, because they must total the length of the support parts on which the pot stacks rest and the length of the separating ledge parts which when the drawer is pulled out separate the lowermost pots and take over the weight of the pot stacks. Thus the support strips must be at least twice the length of one pot row or approx. 80 cm long. The strips are thus unstable in the lateral direction and have to be stiffened by means of transverse elements at the bottom of the front section of the drawer. However, this means that the support strips must be sufficiently high to carry the largest sized pots without the bottom of the pots coming into contact with the stiffening elements. Thus, when the smallest sized pots are dispensed they must drop for a short distance before they reach the recesses in the tray at the lower edge of the support strips. During their fall some pots may hit the recess lopsidedly or may be caught up thus causing delay in operations.

Another drawback with the known apparatus is the relatively long way the drawer must travel each time it is required to separate pots. This is tiring for the operator and delays the separating operation.

The drawbacks mentioned above may partly be relieved by equipping the supporting strips in the longitudinal direction by elevationally displaced pairs of support parts and separating ledge parts, which is a progress in preference to the known arrangement described in the NO—B—137.117 with only one row of separating ledge parts and one row of supporting parts separated from each other with an open space in between.

We are also referring to FR—A1—2.183.556, which describes a reciprocable drawer.

However, the problem regarding the box-shaped pots was not solved by using the former construction of the support parts and the separating ledge parts. It should be mentioned that especially when dispensing the pots from the pot stacks the separated pots would have a tendency to lean over and press towards the walls of the other pots in the pot stacks in such way that the reciprocable drawer could not be removed.

As described on page 4, third subsection, and in the main claim in NO—B—137.117, the abovementioned problem was tried to be solved by arranging the support part and separating ledge part spaced apart.

However, this solution with the new construction was not useful. It was now found that by sloping down the end parts of the support parts and letting the support parts and the separating ledge parts overlap each other, the problem of dispensing the pots without operation disturbances was solved in a quite satisfactory way.

Another progress by the new construction is the continuous support strips in the longitudinal direction of the reciprocable drawer and the overlapping support parts and separating ledge parts on the same which involves a stiffening of the whole construction.

This arrangement allows the separating of pots in both directions of the reciprocable drawer, which again results in a reduction of the total length of the drawer and in the distance in which the reciprocable drawer has to be moved in and out.

In the following the invention will be described with reference to the schematic drawing, where:

Fig. 1 is a perspective view of the apparatus in accordance with the invention.

Fig. 2 is a front view of the apparatus shown as a cut-away view, some parts not being shown.

Figs. 3a—c are side views, partly cut-away views of the uppermost part of the apparatus, where one embodiment of the drawer is shown in different operating phases.

Fig. 4 is a detail view of the termination of the support part and the separating ledge part of the drawer, while Fig. 5a and b are cut-away views along lines A and B in Fig. 4.

For purposes of comparison the same numbers used in the Norwegian Patent No. 137.117 are used for parts of the apparatus which correspond or approximately correspond in the two arrangements, and in the following description more or less the same designations are used for these parts.

The apparatus as shown on the drawings consists mainly of a box-shaped housing 2 with a replaceable magazine 4 of rectangular form in the top wall for insertion of pot stacks 14 and an aperture 23 in the front wall 2' for the insertion of stacks of carrying trays 24, a reciprocable drawer 10 which supports the pot stacks 14 and also separates the lowest pot 17 in each stack of pots 14 from the others, a lifting device 60 to lift a stack of empty carrying trays upwards to the drawer 10, and a separating device 70 to separate the uppermost carrying tray from the stack.

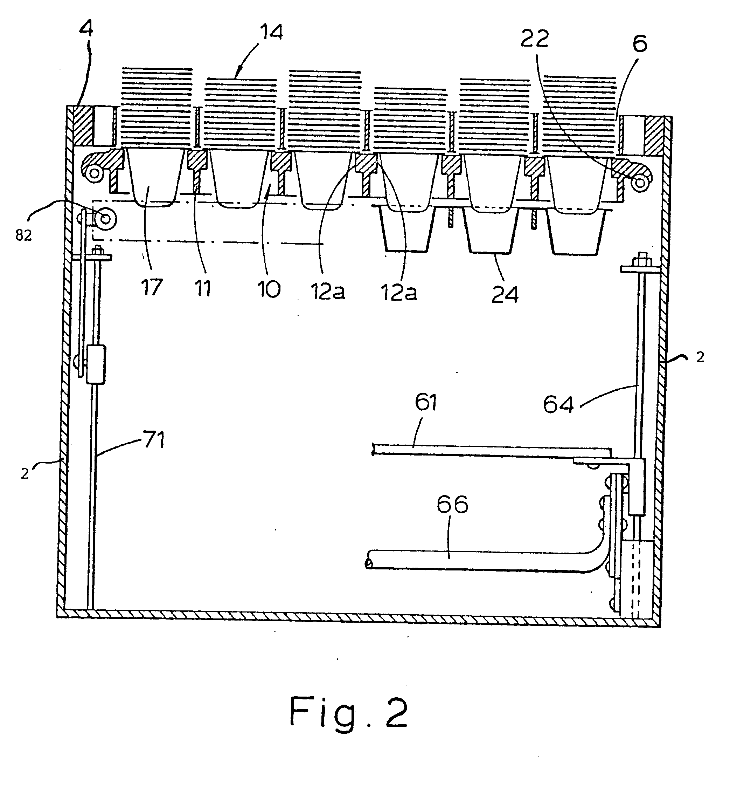

The apparatus consisting of the housing 2, magazine 4, drawer 10, lifting device 60 and tray separating device 70 is symmetrical to the vertical plane through the longitudinal axis right-angled to the front wall 2': For purposes of clarity the following parts are omitted on *Fig. 2*: The lifting device parts 60 and the separating device parts 70.

In the following description expressions like "in front of", "at the rear of", "in the front" and "at the rear", etc. are based on a definition that the viewer is looking from the rear wall 2" towards the front wall 2'.

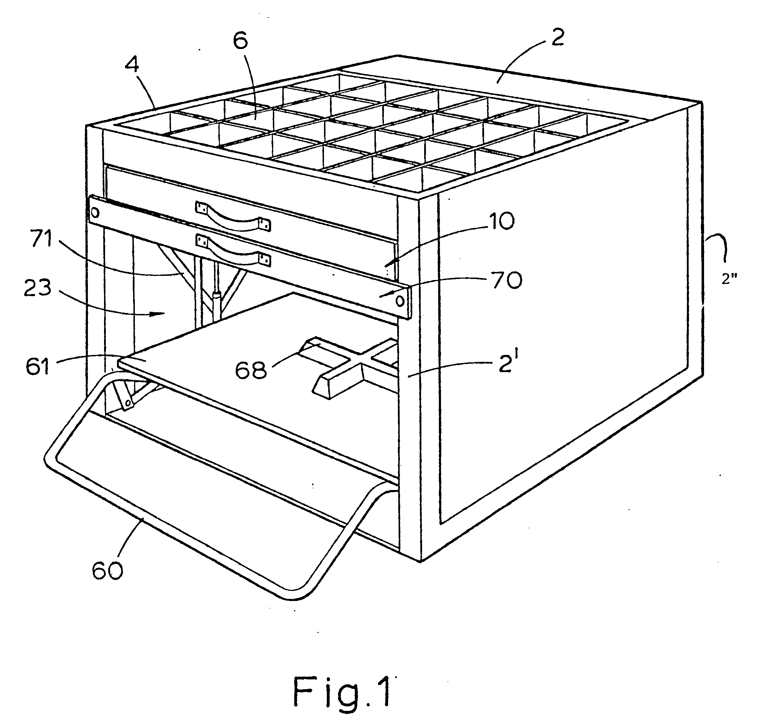

The rectangular magazine 4 is divided into parallel rows of individual shafts 6 for the stacked pots 14. The magazine 4 serves to hold the stacked pots 14 in place during the reciprocal movement of the drawer 10. In the example shown on *Figs. 1—3* a, b, c the magazine 4 has four shafts 6 in each row in the housing's longitudinal direction (i.e. at right angles to the front wall 2') and six shafts 6 in each row in the lateral or transverse direction (i.e. parallel with the front wall 2'). However division of the shafts 6 will vary according to the dimensions of the pots 14 to be dispensed while the outer dimensions of the magazine 4 will be more or less the same.

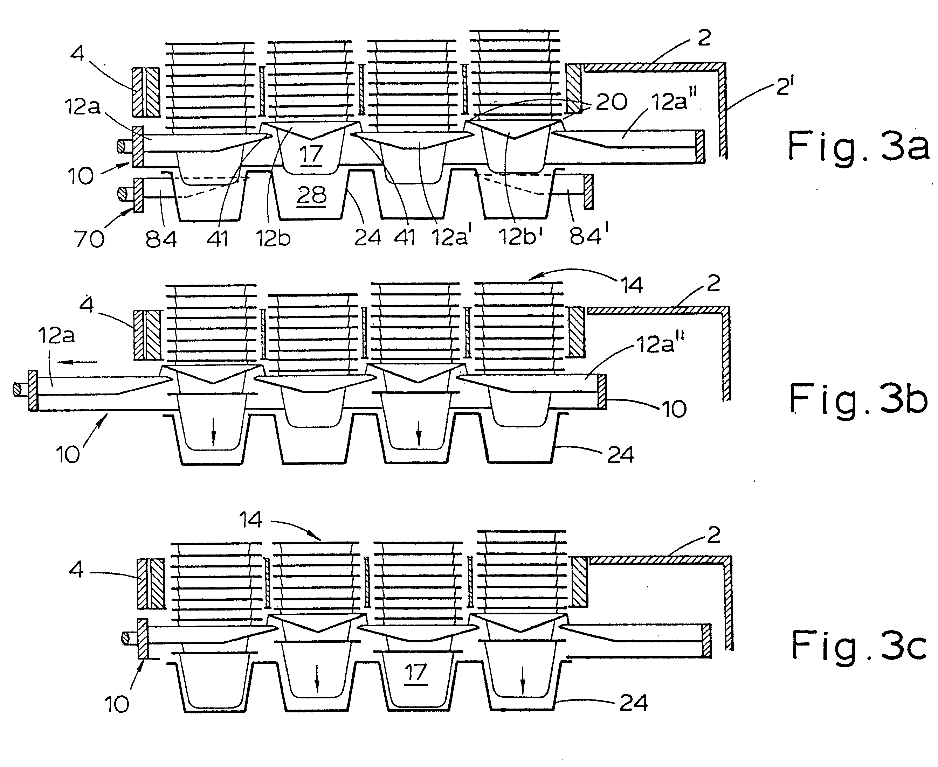

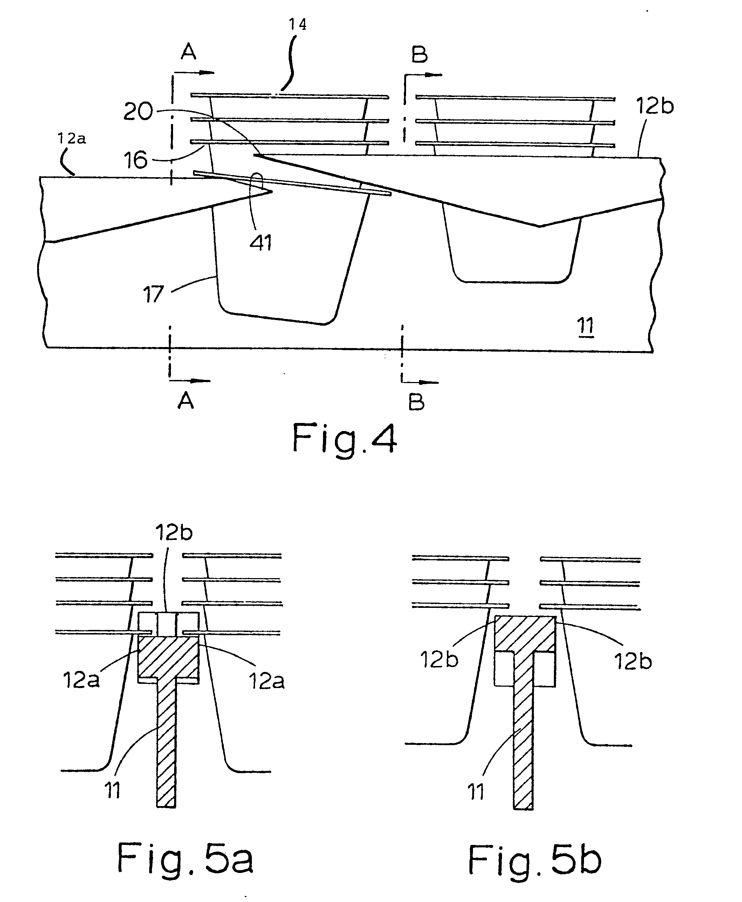

The drawer 10 is movably mounted on slide rails 22 in the housing just below the magazine 4 as shown on *Fig. 2*. The drawer 10 consists of a number of parallel support strips 11 which extend in the direction of travel of the drawer 10 and having mutual spacing corresponding to the width of the magazine 4 shafts 6. As shown on *Fig. 3a* and in greater detail on *Figs. 4 and 5* the upper edge of each strip 11 forms in the longitudinal direction elevationally displaced pairs of support parts 12a, 12a', 12a'' and separating ledge parts 12b, 12b', which protrude on each side of the support strip 11, the upper edge of the support parts 12a, 12a', 12a'' lying under the upper edge of the separating ledge parts 12b, 12b' at a distance approximately equal to half the difference in height between the flanges 16 on two neighbouring pots in stack 14. Attention is drawn to the fact that the separating ledge parts 12b and 12b'—in addition to their separating function—also serve to support pot stacks, while the support parts 12a, 12a', 12a'' only serve as supports as will be described.

At the two outer strips 11 in the drawer 10, which also form the side walls of the drawer 10, the support parts 12a—12a'' and separating ledge parts 12b, 12b' only project on the inside of the strip.

Whereas the support strips according to the Norwegian Patent consist of only one set of support parts 12a and one set of separating ledge parts 12b, the support strips 11 in the example shown on *Fig. 3a—c* are divided into five elevationally displaced sections of which the first 12a, the third 12a' and the fifth 12a'' are support parts, and the two intervening sections 12b and 12b' separating ledge parts. The separating ledge parts 12b, 12b' are wedge-shaped with increasing heights in a direction backwards from a front point 20 and also in a direction forwards from a rear point 20'. The separating ledge parts thereby have a double function, i.e. they separate a pot from an overlying pot stack at the drawer's inward and outward stroke as described below. In the example shown on *Fig. 3a* a pot stack 14 rests on each of the four foremost sections 12a, 12b, 12a' and 12b' in the return position of the drawer 10, i.e. four stacks 14 in each row corresponding with the shafts of the magazine 4. In the case of other pot sizes the support strips 11 can be otherwise arranged in the drawer.

The ends of the support parts 12a—a'' are terminated against the separating ledge parts 12b, 12b' in a guiding part 41, 41' which extend overlapping below the adjacent point 20, as shown in detail on Fig. 4 for the guiding part 41. This embodiment of the ends of the support parts proves a better guide for the pots 14 during the separating operation, at the same time the overlap between the point 41, 41' of the support part 12a and the point 20, 20' of the separating ledge part 12b, 12b' increasing the rigidity or stability of the support strip 11 in the lateral direction.

The lifting device 60 consists mainly of a tray carrier 61 which is horizontally supported on a pantograph-hinged structure (not shown), and which by aid of a manoeuvering rod 66 may be moved up and down along guide rails 64 near the side walls of the housing 2. The lifting device 60 is a conventional type and does not require to be described.

The base used for separated pots 14 is in accordance with the arrangement described in the present invention preferably a tray 24 of the same type of thin plastics material as that used for the pots 14. Each tray 24 consists of a number of consecutive pot-shaped recesses 28 in the same rectangular pattern as the shafts 6 in the magazine 4. The support for the lifting device 60 is provided at the centre of the top side with a cross-shaped raised section 68 which fits into the spaces between the centre recesses 28 in the lowest pot tray 24 in the stack 14 resting on the support. The raised section serves to hold the stack 14 of trays 24 in place on the support.

Also the tray separating device 70 is of mainly conventional type and does not play any part in the invention under consideration. It consists mainly of one pair of separating ledge parts 84, 84' opposite to each other, which by aid of a sliding rod 82 installed below the drawer 10 may be moved to and from each other by way of a guide mechanism 71.

Operation of the apparatus according to the invention is as follows:

With the drawer 10 in the fully closed position a suitable number of stacked pots 14 is placed in the magazine 4. Each pot stack 14 in each pot row will then rest by means of the flanges 16 on the lowermost pots— alternatively on a support part 12a—a'' and a separating ledge part 12b, 12b' as shown in *Fig. 3a*, with the exception of the rearmost 12a" one which does not support pot stacks 14. Having placed a preferably corresponding number of pot trays 24 on the support 61 with the knives 84, 84' of the tray separating device 70 in the outer position, the manoeuvering rod 66 of the lifting device 60 is guided upwards until the topmost tray 24 lies against the lower edge of the support strip 11. The sliding rod 82 of the separating device 70 is then pressed in so that the separating knives enter between the flange edges of the topmost and the next topmost tray 24, at the same time the lifting device's 60 manoeuvering rod 66 being returned to the starting position taking with it the support plate and the remaining trays 24 the separating ledge parts 84, 84' now supporting the upper, separated trays 24 in position directly under the support strips 11.

When the uppermost pot tray 24 is brought into position under the drawer 10, the pots 14 as shown on *Fig. 2 and 3a* have already partly entered their corresponding recesses 28 in the pot tray 24, so that the possibility of displacement when separating the pots is eliminated.

The drawer 10 is then pulled out to a length corresponding to the length of a separating ledge section 12b, 12b' which in the example on *Fig. 3a* approximates the width of a pot stack 14. The length of pull-out of the drawer 10 can be checked by a stop on the side of the drawer which at the same time serves as a front slide shoe for supporting the drawer 10 on the sliding rails 22. As the drawer 10 is pulled out, the front point 20 on each separating ledge section 12b, 12b', will enter between the pot flanges 16 and separate the lowermost pot 17 in the front (first and third) pot stacks 14 which rested on support parts 12a, 12a', in principle in the same manner as explained in detail in the aforementioned Norwegian Patent, and as indicated on the enclosed *Fig. 4*.

With the drawer 10 in this pulled-out position the pot stacks 14 in each row will now be transferred to the rear support 12a', 12a" and separating ledge parts 12b, 12b' as shown on Fig. 3b. When thereafter the drawer 10 is pushed on to its inner end position shown on *Fig. 3c*, the backward directed separating points 20' of the separating ledge part 12b, 12b' will enter between the flanges of the lowest pot 17 in the rear stack 14 (second and fourth as shown on *Fig. 3c*), whereby the lowermost pots 17 in these stacks will be progressively separated and pushed safely downwards along the downward upperside at the end 41 of the support part (12a—12a").

The upper pot tray 24 which is now filled with the pots which were separated by means of the reciprocating movement of the tray 24 drawer 10 as described above, can now be removed from the apparatus by pulling out the separating device's 70 sliding rod at the same time gripping the edge of the tray 24 with the other hand. The apparatus is now ready for filling with a new pot tray 24 in the same way as described.

If the above described apparatus according to the invention is compared with the apparatus in accordance with the aforementioned Norwegian Patent No. 137.117, it will be seen that the length of stroke of the drawer 10 in the latter apparatus will always be at least equal to the length of a pot row, i.e. in practice about 40 cm, while the length of stroke of the apparatus according to the present invention is only a fraction of the length of a pot row, i.e. 1/4 pot row with respect to the drawer 10 embodiment on *Fig. 3a—c*, in practice about 15 cm. Further the total drawer 10 length of the known arrangement must be at least double the length of a pot row while the length in the case of the present invention is limited to one pot row plus the fraction mentioned. Thus the support strips 11 can be made considerably shorter. The improved stiffness which by that means will be obtained combined with the improved stiffness sidewards due to the overlap between the support-12a—a" and the separating ledge part 12b, 12b', eliminates the transverse stiffening, and the strips 11 can be placed so low that the bottoms of the overlying pots enter the underlying pot tray 24 prior to separation of the underlying pots.

## Claim

Apparatus for dispensing propagation pots from rows of pot stacks (14) so as to position them one by one on a tray (24), the apparatus being of type where the pot stacks will be placed in a box-shaped magazine shaft (6) which is installed in the top wall of a box-shaped housing (2) and is equipped with a number of neighbouring stack shafts forming parallel rows and which by means of upper flanges of the pots rest on parallel support strips (11) in a reciprocable, horizontally positioned open drawer (10) which support strips comprise in the longitudinal direction an elevationally displaced support part and a separating ledge part which terminates adjacent the support part in a point, where by the drawer during the reciprocable movement progressively separates in turn transverse rows of pots from the pot stacks positioned above the drawer, the separated pots being received on a tray (24) below the drawer (10), which tray is removable from the housing, characterized in that n+1 support parts (12a, 12a', 12a") and n separating ledge parts (12b, 12b') are provided where 2n is the number of longitudinally directed pot rows in the box-shaped magazine, and that each end of each support part (12a, 12a', 12a") which is adjacent a separating ledge part (12b, 12b') terminates in a downward sloping guiding part (41, 41') which extends overlapping below the adjacent point (20, 20') on the separating ledge part (12b, 12b').

## 7 · 0 012 317 · 8

### Patentanspruch

Ausgabevorrichtung für Blumentöpfe aus Topfstapelreihen (14), wobei die Töpfe einzeln auf einen Boden (24) gestellt werden, wobei die Vorrichtung derart ist, daß die Topfstapel in ein kastenförmiges Magazin (6) eingebracht werden, das in der Deckelwand eines kastenförmigen Gehäuses (2) angeordnet ist und eine Anzahl von benachbarten Stapelschächten aufweist, die parallele Reihen bilden, wobei die oberen flanschförmig ausgebildeten Ränder der Töpfe auf parallel angeordneten Trägerleisten (11) in einer hin- und herbeweglichen, sich horizontal erstreckenden offenen Schublade (10) ruhen, wobei die Trägerleisten in Längsrichtung einen voneinander höhenmäßig abgesetzten Trägerbereich und ein Trennteil aufweisen, das in Nachbarschaft eines Trägerbereichs spitz ausläuft, wobei der Boden während der Hin- und Herbewegung fortschreitend Querreihen der Töpfe von den Topfstapeln oberhalb des Bodens trennt, wobei die abgetrennten Töpfe auf einem Boden (24) unterhalb der Schublade (10) aufgenommen werden, wobei dieser Boden aus dem Gehäuse entfernbar ausgebildet ist, dadurch gekennzeichnet, daß n+1 Trägerbereiche (12a, 12a', 12'') und n Trennteile (12b, 12b') vorgesehen sind, wobei 2n die Anzahl der sich in Längsrichtung erstreckenden Topfstapel in dem kastenförmigen Magazin ist, und daß jedes Ende jeden Trägerbereichs (12a, 12a', 12a''), das sich in Nachbarschaft zu einem Trennteil (12b, 12b') befindet, in einem abwärts verlaufenden Führungsbereich (41, 41') endet, der sich überlappend unter die benachbarte Spitze (20, 20') des Trennteils (12b, 12b') erstreckt.

### Revendication

Appareil pour distribuer des godets de culture à partir de rangées de piles de godets (14) de façon à les positionner un à un sur un plateau (24), l'appareil étant du type dans lequel les piles de godets seront placées dans un alvéole de magasin (6) en forme de boîte qui est installé dans la paroi supérieure d'une caisse (2) en forme de boîte et est équipé d'un certain nombre d'alvéoles de pile voisins formant des rangées parallèles et qui, au moyen des collerettes supérieures des godets reposent sur des bandes supports parallèles (11) appartenant à un tiroir à va-et-vient ouvert (10) disposé horizontalement, lesquelles bandes supports comprennent dans la direction longitudinale, une partie support décalée en hauteur et une partie rebord séparateur qui se termine en position adjacente à la partie support par une pointe, de sorte que, pendant le mouvement de va-et-vient, le tiroir sépare progressivement tour à tour des rangées transversales de godets des piles de godets placées au-dessus du tiroir, les godets séparés étant reçus sur un plateau (24) situé au-dessous du tiroir (10), plateau qui peut être extrait de la caisse, caractérisé en ce qu'il est prévu $n+1$ parties supports (12a, 12a', 12a'') et $n$ parties rebords séparateurs (12b, 12b') où $2n$ est le nombre de rangées de godets dans la direction longitudinale dans le magasin en forme de boîte et en ce que chaque extrémité de chaque partie support (12a, 12a', 12a'') qui est adjacente à une partie rebord séparateur (12b, 12b'') se termine par une partie de guidage en pente verse le bas (41, 41') qui s'étend à recouvrement au-dessous de la pointe adjacente (20, 20') de la partie rebord séparateur (12b, 12b').

Fig.1

1

Fig.2

Fig. 3a

Fig. 3b

Fig. 3c

0012317

Fig.4

Fig.5a

Fig.5b